# EUROPÄISCHE PATENTANMELDUNG

(11) **EP 4 647 199 A1**
(43) Veröffentlichungstag der Anmeldung: **12.11.2025**
(21) Anmeldenummer: 24175148.6
(22) Anmeldetag: 10.05.2024
(51) Int. Cl.: B23K 9/095, B23K 9/173

(54) **FÜGEVORRICHTUNG UND VERFAHREN ZUM FÜGEN EINES WERKSTÜCKS**

(71) Anmelder: FRONIUS INTERNATIONAL GmbH, 4643 Pettenbach (AT)
(72) Erfinder: BINDER, Manuel, 4643 Pettenbach (AT); MAYER, Manuel, 4643 Pettenbach (AT); WALDHÖR, Andreas, 4643 Pettenbach (AT)
(74) Vertreter: Bratovic, Nino Maria

(57) **Zusammenfassung**

Die Erfindung schafft ein Verfahren zum Fügen eines Werkstücks sowie eine Fügevorrichtung. Die Fügevorrichtung (100-700) umfasst:
einen Fügekopf (110; 310-710), welcher dazu ausgebildet ist, einen Lichtbogen (2) zu erzeugen und damit Energie zum Fügen eines Werkstücks (9) auf das Werkstück (9) abzugeben;
ein Lichtaufnahmeelement (121-721); und
eine Auswerteeinrichtung (130; 230), welche dazu eingerichtet ist, ein aktuelles Lichtstärkesignal zu erhalten, welches eine Lichtstärkeinformation über eine Lichtstärke an dem Lichtaufnahmeelement (121-721) umfasst, und welche außerdem dazu eingerichtet ist, basierend auf dem Lichtstärkesignal zu bestimmen, ob aktuell ein Lichtbogen (2) brennt.

## Beschreibung

### Gebiet der Erfindung

Die Erfindung betrifft eine Fügevorrichtung und ein Verfahren zum Fügen eines Werkstücks mittels eines Lichtbogens, beispielsweise eine Schweißvorrichtung und ein Schweißverfahren, mit verbesserter Lichtbogenerkennung, d.h. Detektion des Zustands des Lichtbogens.

### Technischer Hintergrund

Es gibt viele verschiedene Arten von Fügevorrichtungen, also Vorrichtungen, die zum dauerhaften Verbinden von Werkstücken verwendet werden. Hierzu gehören Fügevorrichtungen, die einen Lichtbogen erzeugen, um Material aufzuschmelzen und/oder beispielsweise einen bestimmten Wärmeeintrag in ein Werkstück zu bewirken, beispielsweise Lichtbogenschweißvorrichtungen.

Lichtbögen sind komplexe Phänomene, die eine präzise Steuerung benötigen, und werden häufig in einer fein austarierten Abfolge von Lichtbögen- und Kurzschlussphasen eingesetzt. Kurzschlussphasen können beispielsweise dazu dienen, einen durch den Lichtbogen erzeugten Schweißtropfen einer abschmelzenden Drahtelektrode auf das Werkstück aufzubringen. Danach muss der Lichtbogen typischerweise neu gezündet werden.

Eine genaue Kenntnis darüber, wann der Lichtbogen gerade brennt (d.h., vorliegt), und wann nicht, ist also eine grundlegende Voraussetzung für viele Fügeprozesse. Herkömmlicherweise wird eine Detektion des Lichtbogens oder eines Kurzschlusses auf Basis von Strom- und/oder Spannungsmessungen durchgeführt. Bei bekannten Schweißsystem wird beispielsweise eine Buchsenspannung direkt am Schweißgerät gemessen.

Bei Fügeprozessen mit Lichtbögen fließen jedoch typischerweise hohe Ströme; zudem finden solche Fügeprozesse oft in größerer Zahl am selben Ort oder sogar am selben Werkstück statt, etwa in Montagehallen oder auf Baustellen, insbesondere in Roboter- oder automatisierten Anlagen. Dadurch kann es zu Störeinflüssen, vor allem durch mehrere Fügevorrichtungen, kommen, welche die Spannungsmessungen stark beeinflussen können. Induzierte Spannungsspitzen oder Einkopplungen von Störspannungen durch einen gemeinsamen Massekreis und/oder parallele Schweißkabelverläufe können beispielsweise zur fälschlichen Erkennung eines Kurzschlusses führen. Lösungen, die darauf abzielen, die Spannungsmessung durch zusätzliche Spannungsmessleitungen von den anderen elektrischen Vorgängen zu entkoppeln, sind aufwändig und nicht an jeder Anlage realisierbar. Zudem besteht immer die Gefahr, dass auch auf diese Spannungsmessleitungen wiederum elektrische Störeinflüsse wirken, etwa wenn diese in der Nähe von Schweißleitungen verlegt werden.

### Zusammenfassung der Erfindung

Nach all dem Vorangehenden ist es daher eine Aufgabe der vorliegenden Erfindung, eine verbesserte Fügevorrichtung bereitzustellen, welche insbesondere eine verbesserte Erkennung des Zustands eines Lichtbogens (oder: des Lichtbogenzustands, d.h. brennend oder gelöscht) umfasst.

Dementsprechend stellt die Erfindung, gemäß einem ersten Aspekt, eine Fügevorrichtung bereit, umfassend:
einen Fügekopf, welcher dazu ausgebildet ist, einen Lichtbogen zu erzeugen und damit Energie zum Fügen eines Werkstücks (auf das Werkstück) abzugeben;
ein Lichtaufnahmeelement; und
eine Auswerteeinrichtung, welche dazu eingerichtet ist, ein aktuelles Lichtstärkesignal zu erhalten, welches eine Lichtstärkeinformation über eine Lichtstärke an dem Lichtaufnahmeelement umfasst, und welche außerdem dazu eingerichtet ist, basierend auf dem Lichtstärkesignal zu bestimmen, ob aktuell ein Lichtbogen brennt (oder nicht).

Eine grundlegende Idee der vorliegenden Erfindung besteht somit darin, die mit einem Lichtbogen stets einhergehende elektromagnetische Strahlung (insbesondere sichtbares Licht) zu verwenden bzw. zu detektieren, um darauf basierend den Lichtbogenzustand zu erkennen. Dies kann alternativ oder auch ergänzend zur herkömmlichen Lichtbogenerkennung mittels Messung elektrischer Parameter (z.B. des elektrischen Stroms und/oder der elektrischen Spannung) erfolgen.

Das Lichtaufnahmeelement ist bevorzugt an dem oder in dem Fügekopf angeordnet. Auf diese Weise wird es vorteilhaft immer mit dem Fügeprozess mitgeführt und ist somit stets dazu positioniert, etwaiges von dem Lichtbogen abgegebenes Licht zu empfangen. Alternativ kann das Lichtaufnahmeelement jedoch auch separat angeordnet sein, was beispielsweise einen Teilewechsel vereinfachen kann.

Die Auswerteeinrichtung ist bevorzugt separat von dem Fügekopf ausgebildet und angeordnet und mit diesem beispielsweise (unter anderem) über ein Schlauchpaket verbunden. Dies hat den Vorteil, dass der Fügekopf kompakter ausgebildet werden kann, und empfindliche Elemente der Auswerteeinrichtung besser vor durch den Fügeprozess verursachten Einflüssen geschützt sind. Am Fügekopf sind die Platzverhältnisse nämlich beengt, und man hat es üblicherweise mit Schmauch, mit Spritzern heißen Materials (z.B. Schweißspritzer), mit Hitze und dergleichen zu tun. Die vorliegende Erfindung ermöglicht es unter anderem, am Fügekopf nur das Nötigste für die Lichtbogenerkennung anzuordnen (ein Lichtaufnahmeelement) und andere Elemente dann räumlich getrennt davon anzuordnen.

Die Auswerteeinrichtung kann beispielsweise in einer, oder als Teil einer, Stromquelle und/oder eines Drahtvorschubgeräts (oder kurz: "eines Drahtvorschubs") für die Fügevorrichtung ausgebildet sein, beispielsweise in einer oder als Teil einer Schweißstromquelle und/oder eines Drahtvorschubgeräts.

Bei der Fügevorrichtung kann es sich um eine Vorrichtung für einen beliebigen Fügeprozess handeln, beispielsweise zum Schweißen, zum Lichtbogenlöten, und dergleichen mehr. Im Folgenden wird die Erfindung hauptsächlich mit Bezug auf das Schweißen beschrieben. Dementsprechend kann die Fügevorrichtung eine Schweißvorrichtung sein, der Fügekopf ein Brennerkopf der Schweißvorrichtung, der Lichtbogen ein Schweißlichtbogen, und so weiter. Es versteht sich aber, dass dies nur ein bevorzugtes Beispiel ist, und auch jede andere Art von Fügevorrichtung realisiert werden kann.

Gemäß einigen bevorzugten Ausführungsformen, Varianten oder Verfeinerungen von Ausführungsformen umfasst das Lichtaufnahmeelement ein optisches Einkoppelelement, welches dazu eingerichtet ist, aktuell auf das Lichtaufnahmeelement einfallendes Licht als das aktuelle Lichtstärkesignal in einen optischen Leiter einzukoppeln. Die Auswerteeinrichtung weist vorteilhaft einen Photosensor auf, welcher dazu eingerichtet ist, das eingekoppelte Licht nach dessen Durchquerung des optischen Leiters in ein elektrisches Signal zur Auswertung durch die Auswerteeinrichtung umzuwandeln.

Beispielsweise kann das Lichtaufnahmeelement in oder an dem Fügekopf angeordnet sein, und der optische Leiter zwischen dem Fügekopf und der Auswerteeinrichtung verlaufen, insbesondere ganz oder teilweise innerhalb eines Schlauchpakets. Auf diese Weise erfolgt das Erzeugen der elektrischen Signale entfernt von dem Fügekopf. Zudem kann der optische Leiter das Lichtstärkesignal besonders verlustarm übertragen.

Der optische Leiter kann auch vollständig innerhalb des Fügekopfs angeordnet sein, z.B. innerhalb eines Brennerkörpers einer Schweißvorrichtung, und das an dem Lichtaufnahmeelement zu einer ebenfalls innerhalb des Fügekopfs angeordneten Auswerteeinrichtung leiten. Aus der Sicht des Werkstücks oder des Lichtbogens kann somit das Lichtaufnahmeelement proximal (also näher an dem Lichtbogen und dem Werkstück bei Gebrauch des Fügekopfs), und die Auswerteeinrichtung distal (also weiter entfernt von dem Lichtbogen und dem Werkstück bei Gebrauch des Fügekopfs) in dem Fügekopf angeordnet sein. Auch in dieser Weise kann die Auswerteeinrichtung weiter entfernt von den schwierigen Umgebungsbedingungen und Störeinflüssen in der Nähe des Lichtbogens angeordnet werden.

Bei dem hier beschriebenen Photosensor, sowie bei anderen im Folgenden noch beschriebenen Photosensoren, kann es sich um ein beliebiges Element zum Wandeln von Licht, insbesondere in elektrische Signale, handeln. Beispielsweise kann es sich bei einem Photosensor um eine Photodiode oder einen Phototransistor handeln. Der Photosensor kann auch als eine Kamera oder als Teil einer Kamera ausgebildet sein.

Gemäß einigen bevorzugten Ausführungsformen, Varianten oder Verfeinerungen von Ausführungsformen verläuft der optische Leiter zumindest teilweise parallel zu einer Drahtführungs-Seele für eine abschmelzende Drahtelektrode der Fügevorrichtung und/oder zumindest teilweise parallel zu einem Seelenführungsrohr für die Drahtführungs-Seele (oder: Drahtseele). Wie bereits erwähnt, ermöglicht der optische Leiter die vorteilhafte Trennung des Photosensors von den typischer Weise ungünstigen Bedingungen am Fügekopf. Der optische Leiter kann beispielsweise innerhalb des Rohrbogens des Fügekopfs oder unabhängig davon (beispielsweise daneben) angeordnet sein. In einigen vorteilhaften Varianten ist der optische Leiter zumindest teilweise in eine Drahtführungs-Seele (z.B. einer Schweißvorrichtung mit abschmelzender Drahtelektrode) oder in ein Seelenführungsrohr integriert.

Gemäß einigen bevorzugten Ausführungsformen, Varianten oder Verfeinerungen von Ausführungsformen umfasst der optische Leiter einen Lichtwellenleiter, insbesondere einen flexiblen Lichtwellenleiter (wie etwa eine Glasfaserleitung und/oder eine Kunststofffaserleitung), oder einen starren Lichtwellenleiter (wie etwa einen LED-Lichtleiter) oder besteht daraus. Auf diese Weise ist der optische Leiter besonders robust und verlustarm ausgebildet.

Gemäß einigen bevorzugten Ausführungsformen, Varianten oder Verfeinerungen von Ausführungsformen umfasst der optische Leiter ein Hohlrohr, insbesondere ein an der Innenseite reflektives (d.h., spiegelndes) Hohlrohr. Das Hohlrohr kann beispielsweise ein metallisches Hohlrohr sein und/oder innen mit einer reflektiven Beschichtung versehen sein. Das Hohlrohr kann geradlinig oder gekrümmt ausgeführt sein.

Gemäß einigen bevorzugten Ausführungsformen, Varianten oder Verfeinerungen von Ausführungsformen ist mittels eines Gasführungssystems des Fügekopfs ein Überdruck in dem Hohlrohr ausbildbar. Somit kann der optische Leiter in einfacher und synergistischer Weise vor Spritzern, Schmauch, und dergleichen geschützt werden, ohne dass das Lichteinkoppelelement deswegen in dem eigentlichen Pfad des Schutzgases innerhalb des eigentlichen Gasführungssystems angeordnet sein muss. Stattdessen kann das Hohlrohr mit dem Gasführungssystem verbunden werden und somit einen Teil des Schutzgases auf einem zusätzlichen, durch das Hohlrohr bereitgestellten, Pfad führen.

Das Hohlrohr kann in dem Fügekopf derart angeordnet sein, dass das Schutzgas danach mit dem restlichen, über den eigentlichen Pfad geführten Schutzgas zusammenkommt (etwa innerhalb eines Spritzerschutzes und/oder innerhalb einer Gasdüse), und danach mit diesem gemeinsam aus dem Fügekopf auf das Werkstück ausströmt. Alternativ können spezielle Öffnungen für den durch das Hohlrohr strömenden Teil des Schutzgases in dem Fügekopf vorgesehen sein.

Generell gilt, dass im Bereich sämtlicher optischer Elemente der vorliegenden Erfindung vorteilhaft ein Überdruck angeordnet ist, da hierdurch optisch beeinträchtigende Einflüsse wie etwa Schmauch, Spritzer usw. ferngehalten werden können. Viele Fügevorrichtungen verfügen ohnehin über ein Gasführungssystem (z.B. zum Führen eines Schutzgases beim Schweißen), sodass sich hier vorteilhafte Synergien ergeben.

Gemäß einigen bevorzugten Ausführungsformen, Varianten oder Verfeinerungen von Ausführungsformen weist das Lichtaufnahmeelement einen in dem Fügekopf angeordneten Photosensor auf, welcher dazu eingerichtet ist, das aktuelle Lichtstärkesignal, welches die Lichtstärkeinformation umfasst, durch Wandeln eines auf das Lichtaufnahmeelement einfallenden Lichts in ein elektrisches Signal zu erzeugen. Das elektrische Signal kann drahtgebunden oder drahtlos (z.B. über ein Funkprotokoll wie ZigBee) von dem Photosensor an die Auswerteeinrichtung übertragen werden.

Beispielsweise kann sich der Photosensor bei Push-Pull-Schweißsystemen, bei denen der Brennerkörper (d.h., ein Teil des Fügekopfs) am vorderen Drahtvorschub wechselbar ist, direkt im wechselbaren Brennerkörper befinden. Der wechselbare Brennerkörper kann beispielsweise ein Kontaktrohr, eine Gasdüse, einen Düsenstock, einen Rohrbogen, eine Wasserkühlung, und eine Anschluss-Schnittstelle, etwa an den vorderen Drahtvorschub (d.h., ein Drahtvorschubgerät), aufweisen.

Optional kann auch die Auswerteeinrichtung in dem wechselbaren Brennerkörper integriert sein. Elektrische Signal, entweder von dem Photosensor an die Auswerteeinrichtung, oder von der Auswerteeinrichtung ausgehend (z.B. an eine Steuereinrichtung), können über eine elektromechanische Schnittstelle (z.B. Stecker, Kontaktstifte etc.) von dem wechselbaren Brennerkörper aus an den vorderen Drahtvorschub, den hinteren Drahtvorschub oder direkt an eine Stromquelle oder Stromquellensteuerung übertragen werden.

Gemäß einigen bevorzugten Ausführungsformen, Varianten oder Verfeinerungen von Ausführungsformen weist das Lichtaufnahmeelement und/oder die Auswerteeinrichtung einen optischen Filter auf, insbesondere einen Infrarotfilter. Der optische Filter kann beispielsweise in einen verwendeten Photosensor integriert sein. Auch möglich ist, dass der optische Filter zwischen dem Lichtaufnahmeelement und dem Photosensor angeordnet ist. Zum Beispiel kann ein optischer Leiter selbst mit filternden Eigenschaften, d.h. als optischer Filter, ausgebildet sein. Der optische Filter kann auch zwischen dem Lichtaufnahmeelement und dem optischen Leiter, zwischen dem optischen Leiter und dem Photosensor, oder sogar an der Eingangsseite des Lichtaufnahmeelements angeordnet sein. Der optische Filter kann als ein Filterglas ausgebildet sein.

Das Ausfiltern von Infrarotlicht, damit dieses beim Erkennen des Lichtbogenzustands nicht berücksichtigt wird, hat unter anderem den Grund, dass Infrarotstrahlung bei typischen Fügeprozessen nicht nur vom Lichtbogen, sondern beispielsweise auch als Wärmestrahlung von erhitzten Werkstückabschnitten ausgeht. Die Aussendung von Wärmestrahlung setzt sich häufig noch eine Weile fort, auch nachdem der Lichtbogen erloschen ist, und kann somit die Detektion des Lichtbogenzustands erschweren. Somit wird durch den optischen Filter, insbesondere einen Infrarotfilter, auf Licht außerhalb des Infrarotbereichs für die Detektion des Lichtbogenzustands abgestellt, was die Erkennung verbessert.

Gemäß einigen bevorzugten Ausführungsformen, Varianten oder Verfeinerungen von Ausführungsformen weist der Fügekopf ein Gasführungssystem zum Ausströmen eines Schutzgases auf. Das Lichtaufnahmeelement ist vorteilhaft in einem Überdruckbereich des Gasführungssystems angeordnet. Wie bereits erwähnt wurde, kann dies in natürlicher Weise Verschmutzungen (z.B. Schweißspritzer) oder optische Beeinträchtigungen (z.B. Schmauch) von dem Lichtaufnahmeelement fernhalten.

Gemäß einigen bevorzugten Ausführungsformen, Varianten oder Verfeinerungen von Ausführungsformen ist das Lichtaufnahmeelement zum Aufnehmen von Licht in einem Zwischenraum zwischen einem Kontaktrohr des Fügekopfs und einer Gasdüse des Fügekopfs angeordnet und eingerichtet. Es hat sich herausgestellt, dass die Lichtstärke hier ausreichend ist, während das Lichtaufnahmeelement dort gut vor äußeren Einflüssen geschützt ist.

Gemäß einigen bevorzugten Ausführungsformen, Varianten oder Verfeinerungen von Ausführungsformen liegt das Lichtaufnahmeelement an einem lichtdurchlässigen Element des Fügekopfs an und ist zum Aufnehmen von Licht durch das lichtdurchlässige Element hindurch eingerichtet. Auf diese Weise ist das Lichtaufnahmeelement noch besser gegen äußere Einflüsse geschützt. Zudem kann das lichtdurchlässige Element austauschbar ausgebildet sein, was die Lebensdauer oder Funktionsfähigkeit des Fügekopfs erhöht. Bei dem lichtdurchlässigen Element kann es sich insbesondere um einen Isolierring zwischen einem Düsenstock des Fügekopfs und einem Brennerkörper des Fügekopfs oder um einen Spritzerschutz des Fügekopfs handeln.

Gemäß einigen bevorzugten Ausführungsformen, Varianten oder Verfeinerungen von Ausführungsformen ist das Lichtaufnahmeelement im Inneren eines Düsenstocks (oder: Kontaktrohr-Düsenstocks) des Fügekopfs angeordnet. Bevorzugt ist das Lichtaufnahmeelement hier derart angeordnet, dass durch Bohrungen im Düsenstock, welche zum Ausströmen (oder: Ausstoßen) eines Gases ausgebildet sind, Licht des Lichtbogens auf das Lichtaufnahmeelement fallen kann. Auch hier ist das Lichtaufnahmeelement somit durch seine Anordnung als auch durch einen im Düsenstock im Betrieb vorhandenen Überdruck geschützt.

Gemäß einigen bevorzugten Ausführungsformen, Varianten oder Verfeinerungen von Ausführungsformen ist das Lichtaufnahmeelement zumindest teilweise außerhalb des Fügekopfs angeordnet.

Gemäß einigen bevorzugten Ausführungsformen, Varianten oder Verfeinerungen von Ausführungsformen umfasst die Fügevorrichtung außerdem eine Steuereinrichtung, welche dazu eingerichtet ist, basierend auf dem Lichtstärkesignal mindestens eine Funktion der Fügevorrichtung zu steuern und/oder zu regeln. Beispielsweise können elektrische Parameter des Fügeprozesses (z.B. ein Schweißstrom und/oder eine Schweißspannung), mechanische Parameter des Fügeprozesses (z.B. eine Drahtvorschubgeschwindigkeit, eine Drahtvorschubbeschleunigung und/oder eine Drahtvorschubrichtung), Startsignale, Endsignale, und dergleichen durch die Steuereinrichtung basierend auf dem Lichtstärkesignal erzeugt und ausgesendet werden. Ein Beispiel hierfür ist das Steuern von Schweißstrom und Schweißspannung in Abhängigkeit von der Information, ob aktuell ein Lichtbogen brennt oder nicht.

Gemäß einem zweiten Aspekt stellt die Erfindung außerdem ein Verfahren zum Fügen eines Werkstücks mittels eines Fügeprozesses bereit, welches zumindest die folgenden Schritte umfasst:
Durchführen des Fügeprozesses, umfassend zumindest ein Erzeugen eines Lichtbogens zum Abgeben von Energie zum Fügen des Werkstücks;
Erzeugen eines aktuellen Lichtstärkesignals, welches eine aktuelle Lichtstärkeinformation über eine Lichtstärke von Licht umfasst, welches bei dem Erzeugen des Lichtbogens entsteht;
Bestimmen, basierend auf dem Lichtstärkesignal, ob aktuell der Lichtbogen brennt; und
Steuern und/oder Regeln des Fügeprozesses in Abhängigkeit davon, ob der Lichtbogen aktuell brennt.

Gemäß einigen bevorzugten Ausführungsformen, Varianten oder Verfeinerungen von Ausführungsformen umfasst das Verfahren außerdem ein Bestimmen mindestens einer Zusatzinformation über einen aktuell brennenden Lichtbogen oder über einen Zustand des Fügeprozesses basierend auf einem Signalverlauf des Lichtstärkesignals, insbesondere basierend auf einem analogen Signalverlauf.

Weitere bevorzugte Ausführungsformen, Varianten und Weiterbildungen von Ausführungsformen ergeben sich aus den Unteransprüchen sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: eine schematische Prinzipskizze einer Fügevorrichtung gemäß einer Ausführungsform der vorliegenden Erfindung;
- Fig. 2: eine schematische Prinzipskizze einer Fügevorrichtung gemäß einer weiteren Ausführungsform der vorliegenden Erfindung;
- Fig. 3: eine schematische Darstellung einer Fügevorrichtung gemäß einer weiteren Ausführungsform der vorliegenden Erfindung;
- Fig. 4: einen Teil der Darstellung aus Fig. 3, mit zusätzlichen Pfaden, welche das Licht des Lichtbogens nehmen kann;
- Fig. 5: eine schematische Darstellung einer Fügevorrichtung gemäß noch einer weiteren Ausführungsform der vorliegenden Erfindung;
- Fig. 6: eine schematische Darstellung einer Fügevorrichtung gemäß noch einer weiteren Ausführungsform der vorliegenden Erfindung;
- Fig. 7: eine schematische Darstellung einer Fügevorrichtung gemäß noch einer weiteren Ausführungsform der vorliegenden Erfindung;
- Fig. 8 und Fig. 9: verschiedene Formen, welche ein Lichteinkoppelelement annehmen kann;
- Fig. 10: eine schematische Darstellung einer Fügevorrichtung gemäß einer weiteren Ausführungsform der vorliegenden Erfindung;
- Fig. 11A und Fig. 11B: schematische Graphen zur Erläuterung der Funktionsweise der erfindungsgemäßen Fügevorrichtungen; und
- Fig. 12: ein schematisches Flussdiagramm zur Erläuterung eines Verfahren gemäß einer Ausführungsform der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

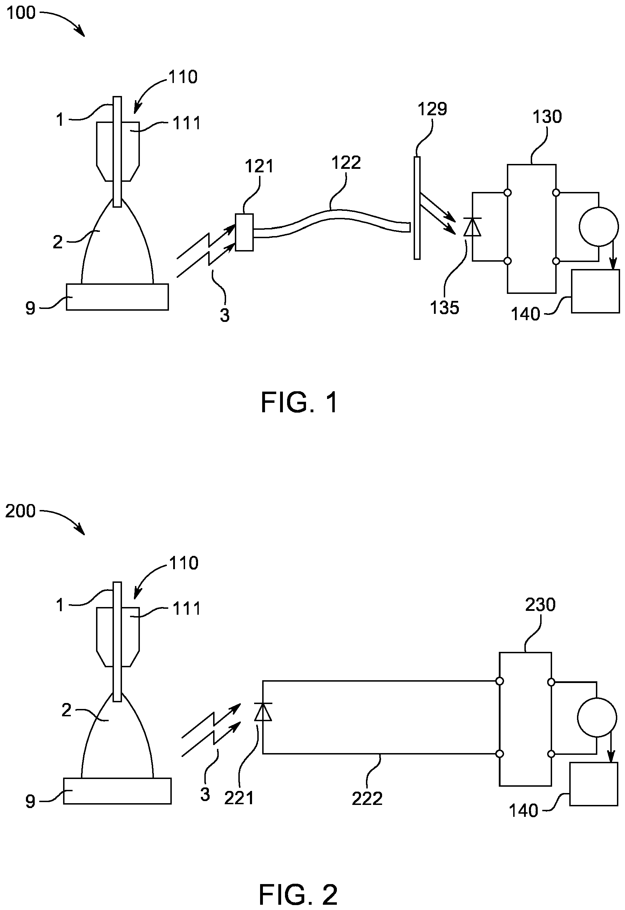

Fig. 1 zeigt eine schematische Prinzipskizze einer Fügevorrichtung 100 gemäß einer Ausführungsform der vorliegenden Erfindung.

Die Fügevorrichtung 100 umfasst einen Fügekopf 110, der hier beispielhaft als ein Schweißkopf mit einem Kontaktrohr 111 dargestellt ist. Das Kontaktrohr 111 ist dazu ausgelegt, eine Drahtelektrode 1 zu führen. Der Fügekopf 110 ist dazu eingerichtet, zwischen der Drahtelektrode 1 und einem zu fügenden (hier: schweißenden) Werkstück 9 einen Lichtbogen 2 zum Fügen des Werkstücks 9 auszubilden.

Die Fügevorrichtung 100 umfasst außerdem ein Lichtaufnahmeelement, welches hier als ein Lichteinkoppelelement 121 ausgebildet ist und welches dazu angerichtet und angeordnet ist, Licht 3 von dem Lichtbogen 2 aufzunehmen, wenn dieser aktuell brennt. Weiterhin umfasst die Fügevorrichtung 100 eine Auswerteeinrichtung 130, welche dazu eingerichtet ist, ein aktuelles Lichtstärkesignal zu erhalten, welches eine Lichtstärkeinformation über eine Lichtstärke an dem Lichteinkoppelelement 121 umfasst.

Die Auswerteeinrichtung 130 ist außerdem dazu eingerichtet, basierend auf dem aktuellen Lichtstärkesignal den aktuellen Lichtbogenzustand zu bestimmen, d.h. zu bestimmen, ob aktuell der Lichtbogen 2 brennt oder nicht brennt (also erloschen ist). Alternativ oder zusätzlich kann die Auswerteeinrichtung 130 auch dazu eingerichtet sein, basierend auf dem aktuellen Lichtstärkesignal zu bestimmen, ob aktuell ein Kurzschluss vorliegt oder nicht. Hierzu kann die Auswerteeinrichtung 130 das aktuelle Lichtstärkesignal beispielsweise mit einem Lichtstärke-Schwellwert vergleichen.

Die Fügevorrichtung 100 kann außerdem eine Steuereinrichtung 140 aufweisen, welche dazu eingerichtet ist, basierend zumindest darauf, ob der Lichtbogen 2 aktuell brennt (oder nicht), den durch die Fügevorrichtung 100 aktuell durchgeführten Fügeprozess zu steuern und/oder zu regeln. Beispielsweise können elektrische Parameter des Fügeprozesses (z.B. ein Schweißstrom und/oder eine Schweißspannung), mechanische Parameter des Fügeprozesses (z.B. eine Drahtvorschubgeschwindigkeit, eine Drahtvorschubbeschleunigung und/oder eine Drahtvorschubrichtung der Drahtelektrode 1), Startsignale, Endsignale, und dergleichen durch die Steuereinrichtung 140 basierend auf dem Lichtstärkesignal (und basierend insbesondere darauf, ob der Lichtbogen 2 aktuell brennt oder nicht) erzeugt und ausgesendet werden.

Bei der in Fig. 1 gezeigten Ausführungsform ist das Lichteinkoppelelement 121 mit einem optischen Leiter 122, beispielsweise einer Glasfaserleitung oder Kunststofffaserleitung, verbunden, und dazu eingerichtet, das von dem Lichtaufnahmeelement aufgenommene Licht 3 in den optischen Leiter 122 einzukoppeln. Am anderen Ende des optischen Leiters 122 wird das Licht wieder ausgekoppelt und von einem Photosensor 135 erfasst und in elektrische Signale gewandelt. Der Photosensor 135 ist in Fig. 1 als Teil der Auswerteeinrichtung 130 dargestellt. Das über den optischen Leiter 122 transportierte Licht stellt somit ein aktuelles Lichtstärkesignal dar, welches eine Lichtstärkeinformation über eine Lichtstärke an dem Lichtaufnahmeelement (hier: Lichteinkoppelelement 121) umfasst.

Die Fügevorrichtung 100 kann, wie im Vorangehenden bereits beschrieben wurde, einen optischen Filter 129 umfassen, welcher insbesondere dazu eingerichtet ist, Infrarotlicht auszufiltern. In Fig. 1 ist der optische Filter 129 als ein Filterglas ausgebildet und zwischen dem distalen Ende des optischen Leiters 122 und dem Photosensor 135 angeordnet. Selbstverständlich sind auch alle anderen beschriebenen Varianten möglich, etwa dass der optische Leiter 122 mit einer Filterwirkung ausgebildet ist.

Auf diese Weise fällt ausschließlich gefiltertes Licht auf den Photosensor 135, wobei der optische Filter 129 insbesondere auf das Lichtspektrum des Lichtbogens 2 angepasst ist, welchen auszubilden der Fügekopf 110 eingerichtet ist.

Fig. 2 zeigt eine schematische Prinzipskizze einer Fügevorrichtung 200 gemäß einer weiteren Ausführungsform der vorliegenden Erfindung. Die Fügevorrichtung 200 unterscheidet sich von der Fügevorrichtung 100 aus Fig. 1 in der Gestaltung und Anordnung des Lichtaufnahmeelements, der Art des Lichtstärkesignals, und in der Art, wie dieses übertragen wird.

Die Fügevorrichtung 200 ist so eingerichtet, dass das Licht 3 von dem Lichtbogen 2 von einem Photosensor 221 empfangen und in elektrische Signale umgewandelt wird, die mittels elektrischer Leiter 222 an eine Auswerteeinrichtung 230 übermittelt werden. Die Auswerteeinrichtung 230 ist dazu eingerichtet, die elektrischen Signale als ein aktuelles Lichtstärkesignal zu erhalten, welches eine Information über eine Lichtstärke an dem Lichtaufnahmeelement, d.h. hier dem Photosensor 221 umfasst, um den Lichtbogenzustand zu bestimmen.

Anhand der nachfolgenden Figuren werden verschiedene detailliertere Realisierungsmöglichkeiten beschrieben.

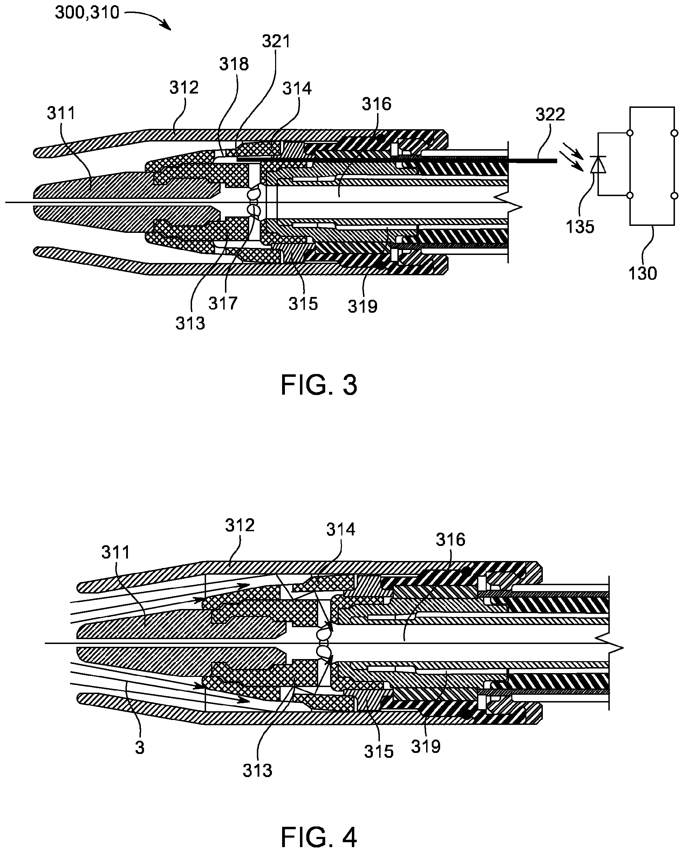

Fig. 3 zeigt eine schematische Darstellung einer Fügevorrichtung 300 gemäß einer weiteren Ausführungsform der vorliegenden Erfindung, mit einer schematischen Querschnittsansicht durch jenen Teil eines Fügekopfs der Fügevorrichtung 300, der dem Fügeprozess zugewendet ist, hier beispielhaft eines Schweißkopfs 310. Bei der Fügevorrichtung 300 handelt es sich somit um eine Schweißvorrichtung.

Der Schweißkopf 310 umfasst ein Kontaktrohr 311, durch welches eine hindurch geführte abschmelzende Drahtelektrode 1 (in Fig. 3 nicht dargestellt) kontaktierbar ist, um sie auf ein Schweißpotenzial (insbesondere Schweißplus) zu bringen. Durch eine Spannungsdifferenz zum Werkstück 9, an welchem ein anderes Potenzial (insbesondere Schweißminus) anliegt, ist der Lichtbogen 2 ausbildbar. Die abschmelzende Drahtelektrode 1 (oder: der Schweißdraht) verläuft vor dem Kontaktrohr 311 innerhalb einer Drahtführungs-Seele (oder: Drahtseele), die wiederum in einem Seelenführungsrohr 316 verläuft.

Zu dem Schweißkopf 310 wird die Drahtführungs-Seele typischerweise in einem Schlauchpaket geführt. Eine Drahtvorschubeinrichtung zum Fördern der Drahtelektrode 1 kann in dem Schweißkopf 310, in einer Schweißstromquelle der Fügevorrichtung 300, oder auch verteilt (z.B. im Falle eines Push-Pull-Motors als Drahtvorschubeinrichtung) angeordnet sein.

Der Schweißkopf 310 aus Fig. 3 ist außerdem zum Ausstoßen (oder: Ausströmenlassen) eines Schutzgases eingerichtet. Hierzu ist das Kontaktrohr 311 in radialer Richtung von einer Gasdüse 312 des Schweißkopfs 310 umgeben, die eine Öffnung am proximalen Ende des Kontaktrohrs 311 freilässt. Das Seelenführungsrohr 316 fungiert hierbei auch als Gasführung. Zu dem Seelenführungsrohr 316 kann das Schutzgas beispielsweise in einem Gasschlauchs innerhalb des Schlauchpakets geführt werden.

Wie in Fig. 3 gezeigt ist, ist mit dem Seelenführungsrohr 316 ein Düsenstock 314 verbunden, insbesondere verschraubt, der ein Bindeglied zwischen dem Kontaktrohr 311 (auch Stromdüse genannt) und dem restlichen Schweißkopf 310 darstellt. Beispielsweise kann das Kontaktrohr 311 über ein Gewinde in den Düsenstock 313 einschraubbar sein. Im vorliegenden Beispiel sind in dem Düsenstock 313 außerdem Bohrungen 317 angeordnet, mittels welcher das Schutzgas aus dem Seelenführungsrohr 316 zielgerichtet ausströmen kann, beispielsweise direkt in einen Zwischenraum zwischen dem Kontaktrohr 311 und der Gasdüse 312.

Zwischen dem Düsenstock 313 und der Gasdüse 312 kann zusätzlich ein Spritzerschutz 314 angeordnet werden, welcher den Düsenstock 313 und die dahinter liegenden Elemente z.B. vor Schweißspritzern schützt. Das Schutzgas kann somit das Seelenführungsrohr 316 durch die Bohrungen 317 verlassen, dann durch Öffnungen 318 in dem Spritzerschutz 314 strömen, und dann den Schweißkopf 310 am Ende der Gasdüse 312 verlassen. Der Schweißkopf 310 kann außerdem mit einer Wasserkühlung 319 versehen sein. Zwischen dem Düsenstock 313 und dem Brennerkörper kann ein Isolierring 315 angeordnet sein.

Bei der Fügevorrichtung 300 ist das Lichtaufnahmeelement als ein Lichteinkoppelelement 321 ausgebildet, welches zwischen dem Düsenstock 313 und dem Spritzerschutz 314 angeordnet ist, also in einer vor Schweißspritzern gut geschützten Position. Darüber hinaus herrscht dort im Betrieb der Fügevorrichtung 300 ein Überdruck aufgrund des ausströmenden Schutzgases, sodass Schmauch und andere Partikel, die über die Öffnung an der Spitze des Schweißkopfs 310 eintreten könnten, aktiv von dem Lichtaufnahmeelement weggeblasen werden. Vorteilhaft ist das Lichteinkoppelelement 321 direkt hinter den Öffnungen 318 in dem Spritzerschutz 314 angeordnet, um das Licht 3 des Lichtbogens 2 besonders gut erfassen zu können.

Über einen optischen Leiter 322, etwa eine Glas- oder Kunststofffaserleitung, wird das von dem Lichteinkoppelelement 321 eingekoppelte Licht an einen Photosensor 135 einer Auswerteeinrichtung 130 geleitet, die weiter hinten im Schweißkopf 310 oder aber am anderen Ende eines Schlauchpakets, etwa in einem Drahtvorschubgerät, einer Schweißstromquelle, oder separat ausgebildet sein kann.

Die Auswerteeinrichtung 130 kann hier und im Folgenden so ausgebildet sein wie mit Bezug auf Fig. 1, oder wie mit Bezug auf die Auswerteeinrichtung 230 von Fig. 2 beschrieben wurde, oder gemäß einer beliebigen anderen Option, Variante, oder Verfeinerung. Insbesondere kann die Fügevorrichtung 300 (und auch jede der anderen hierin beschriebenen Fügevorrichtungen) auch die Steuereinrichtung 140 aus Fig. 1 aufweisen.

Fig. 4 zeigt ein Detail der Darstellung des Schweißkopfs 310 wie Fig. 3, wobei zusätzlich mögliche Pfade eingezeichnet sind, welche das Licht 3 des Lichtbogens 2 nehmen kann. Durch Ein- oder Mehrfachreflexionen kann das Licht 3 so - durch die Öffnungen 318 und die Bohrungen 317 - sogar bis in das Seelenführungsrohr 316 gelangen, sodass das Lichteinkoppelelement 321 prinzipiell auch an irgendeiner anderen Stelle entlang der dargestellten Pfade angeordnet sein kann.

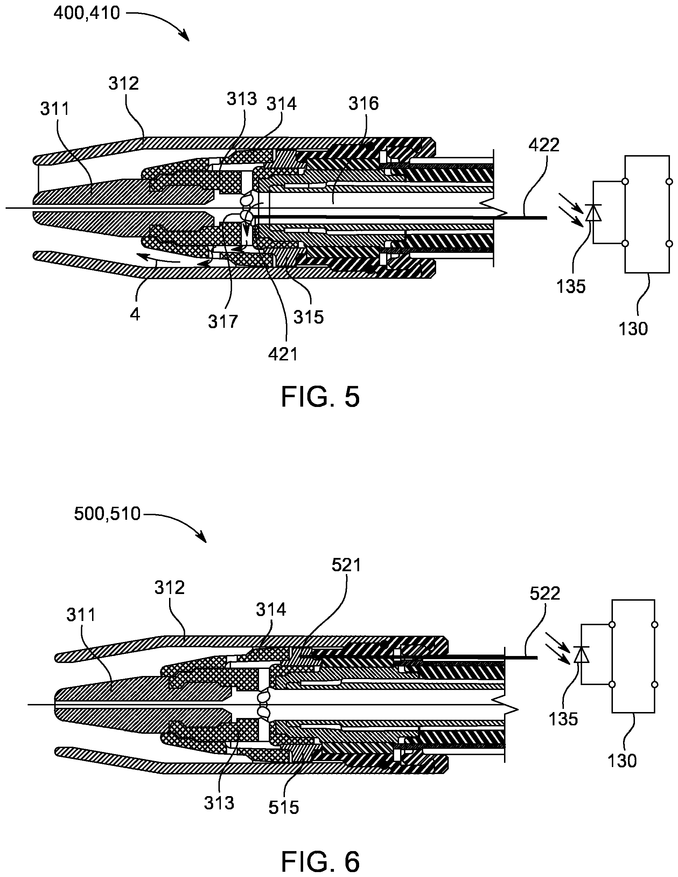

Fig. 5 zeigt eine schematische Darstellung einer Fügevorrichtung 400 gemäß einer weiteren Ausführungsform der vorliegenden Erfindung, mit einer schematischen Querschnittsansicht durch einen Fügekopf der Fügevorrichtung 400, hier beispielhaft ein Schweißkopf 410. Der Schweißkopf 410 ist ebenso ausgebildet wie der Schweißkopf 310 der Fügevorrichtung 300, bis auf die Positionierung des Lichteinkoppelelements 421 und des optischen Leiters 422.

Bei der Fügevorrichtung 400 ist das Lichteinkoppelelement 421 innerhalb des Seelenführungsrohrs 316 angeordnet, im Bereich der Bohrungen 317. Der optische Leiter 422 verläuft ebenfalls innerhalb des Seelenführungsrohrs 316, insbesondere parallel zu diesem. Auf diese Weise wird der verfügbare Raum Hohlraum innerhalb des Seelenführungsrohrs 316 besonders effizient ausgenutzt. Der optische Leiter 422 kann wiederum als Glas- oder Kunststofffaserleiter ausgebildet sein.

Der typische Weg, den das Schutzgas 4 aus dem Seelenführungsrohr 316 nach außen nimmt, ist in Fig. 5 schematisch eingezeichnet, um zu verdeutlichen, dass sich das Lichteinkoppelelement 421 im Überdruckbereich befindet und dort gut vor Schweißspritzern, Schmauch etc. geschützt ist. Das Licht 3 des Lichtbogens 2 nimmt dabei den längsten in Fig. 4 dargestellten Pfad, durch die Bohrungen 317 hindurch bis zu dem Lichteinkoppelelement 421.

Obwohl die Fügevorrichtung 400, wie in Fig. 5 gezeigt, auch einen Spritzerschutz 314 aufweisen kann, eignet sich die Anordnung des Lichteinkoppelelements 421 innerhalb des Seelenführungsrohrs 316 besonders für solche Fügevorrichtungen, welche über keinen Spritzerschutz 314 verfügen, oder für Fügeköpfe, die häufig auch ohne Spritzerschutz 314 eingesetzt werden.

Fig. 6 zeigt eine schematische Darstellung einer Fügevorrichtung 500 gemäß einer weiteren Ausführungsform der vorliegenden Erfindung, mit einer schematischen Querschnittsansicht durch einen Fügekopf der Fügevorrichtung 500, hier beispielhaft ein Schweißkopf 510.

Der Schweißkopf 410 ist ebenso ausgebildet wie der Schweißkopf 310 der Fügevorrichtung 300 oder der Schweißkopf 410 der Fügevorrichtung 400, bis auf die Positionierung des Lichteinkoppelelements 521 und des optischen Leiters 522 sowie die Ausgestaltung des Isolierrings 515.

Der Isolierring 515 ist hier durchsichtig oder durchscheinend ausgebildet, d.h. derart, dass das Licht 3 des Lichtbogens 2 zumindest teilweise in den Isolierring 515 eindringen oder diesen durchqueren kann. Der Isolierring 515 kann beispielsweise aus Glas, Keramik, und/oder aus einem Kunststoff ausgebildet sein, wobei der Kunststoff vorteilhaft eine Schmelztemperatur von über 200°C, insbesondere von über 250°C, ganz besonders von über 300°C aufweist. Beispielsweise kann es sich bei dem Kunststoff um Polyetheretherketon (PEEK) oder einen anderen thermoplastischen Kunststoff handeln.

Das Lichteinkoppelelement 521 ist in den Isolierring 515 eingebettet, oder an diesen anliegend, ausgebildet, derart, dass es das Licht 3 des Lichtbogens 2 aus dem Isolierring 515 in den optischen Leiter 522 einkoppelt. Der optische Leiter 522 kann wiederum als Glas- oder Kunststofffaserleiter ausgebildet sein.

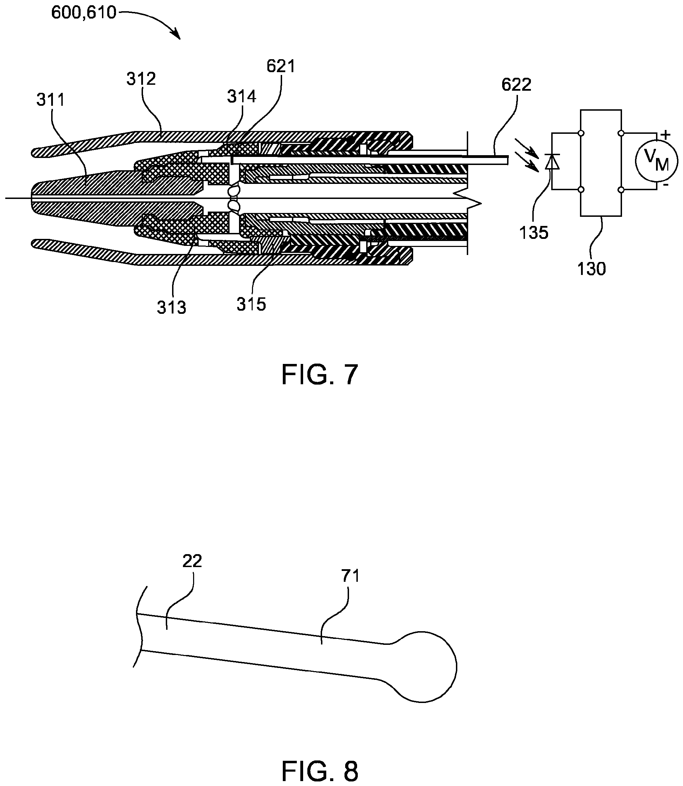

Fig. 7 zeigt eine schematische Darstellung einer Fügevorrichtung 600 gemäß einer weiteren Ausführungsform der vorliegenden Erfindung, mit einer schematischen Querschnittsansicht durch einen Fügekopf der Fügevorrichtung 600, hier beispielhaft ein Schweißkopf 610.

Bei der Fügevorrichtung 600 ist der optische Leiter 622 als ein reflektives Hohlrohr ausgebildet, beispielsweise als ein metallisches Hohlrohr (z.B. aus Kupfer) und/oder als ein Hohlrohr mit einer reflektiven innenseitigen Beschichtung. Bei der in Fig. 7 gezeigten Variante ist das Lichteinkoppelelement 621 wie das Lichteinkoppelelement 321 der Fügevorrichtung 300 aus Fig. 3 zwischen dem Düsenstock 313 und dem Spritzerschutz 314 angeordnet, falls ein Spritzerschutz 314 vorhanden ist, oder sonst zwischen dem Düsenstock 313 und der Gasdüse 312.

Das Lichteinkoppelelement 621 kann an dem proximalen Ende des Hohlrohrs des optischen Leiters 622 angebracht sein und kann beispielsweise einen Lichtwellenleiter (etwa mindestens eine Glasfaser und/oder mindestens eine Kunststoffaser) umfassen.

Alternativ kann das proximale Ende des Hohlrohrs offen ausgebildet sein und damit selbst als das Lichteinkoppelelement 621 fungieren. In diesem Fall kann vorteilhaft vorgesehen sein, dass das Hohlrohr an das Gasführungssystem der Fügevorrichtung 600 angeschlossen ist und ein Teil des Schutzgases 4 durch das Hohlrohr transportiert wird. Auch bei dieser Variante befindet sich das Lichteinkoppelelement 621 (also die proximale Öffnung des Hohlrohrs) in einem Überdruckbereich. Wie aus Fig. 7 ersichtlich ist, strömt der durch das Hohlrohr geleitete Teil des Schutzgases 4 zwischen den Öffnungen 317 in dem Düsenstock 313 und dem Spritzerschutz 314 wieder mit dem restlichen Schutzgas, welches entlang des in Fig. 4 gezeigten Pfades verläuft, zusammen.

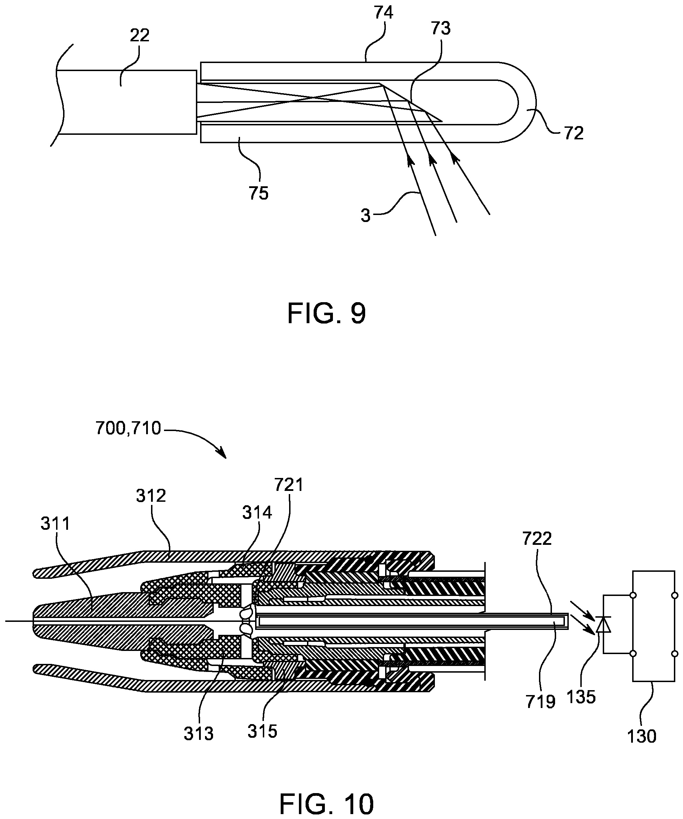

Fig. 8 und Fig. 9 zeigen beispielhaft verschiedene Formen, welche das Lichteinkoppelelement 121; 321; 421; 521; 621 annehmen kann.

Fig. 8 zeigt ein an der Spitze mit Kugelgeometrie 71 ausgebildetes Lichteinkoppelelement, mittels welchem Licht aus einem großen Raumwinkelbereich heraus aufgenommen und in den entsprechenden optischen Leiter z.B. einen Lichtwellenleiter 22, eingekoppelt werden kann.

Fig. 9 zeigt eine Variante, in welcher das Lichteinkoppelelement einen an der Spitze schräg abgeschnittenen Lichtwellenleiter aufweist, welcher zu seinem Schutz mit einer transparenten oder durchscheinenden Kapsel 72 verkapselt ist. Wie die schematische Strahlführung in Fig. 9 zeigt, können auf diese Weise auch Lichtstrahlen 3, die mit Winkeln zwischen 60° und 90° zur Längsachse des Lichtwellenleiters auftreffen, durch Totalreflexion an der Innenseite der abgeschrägten Spitze 73 noch in den Lichtwellenleiter 22 eingekoppelt werden. Da das Lichteinkoppelelement 121; 321; 421; 521; 621 in vielen Fällen an oder in der Nähe einer Wand angeordnet ist, kann es somit vorteilhaft sein, ein Lichteinkoppelelement 121-621 wie in Fig. 9 gezeigt auszubilden, wobei eine Außenseite 74 der Kapsel 72, welcher die äußere Schnittfläche der abgeschrägten Spitze 73 zugewandt ist, zu der Wand hin angeordnet wird, sodass die gegenüberliegende Außenseite 75 eine besonders große Lichtausbeute hat.

Fig. 10 zeigt eine schematische Darstellung einer Fügevorrichtung 700 gemäß einer weiteren Ausführungsform der vorliegenden Erfindung, mit einer schematischen Querschnittsansicht durch einen Fügekopf der Fügevorrichtung 700, hier beispielhaft ein Schweißkopf 710.

Bei der Fügevorrichtung 700 ist in dem Seelenführungsrohr 316 eine Drahtführungs-Seele 719 angeordnet, in welche ein Lichteinkoppelelement 721 und ein optischer Leiter 722 integriert sind. Beispielsweise kann die Drahtführungs-Seele 719 eine lichtleitende Schicht in ihrem Außenmantel aufweisen, die als der optische Leiter 722 fungiert. Das Lichteinkoppelelement 721 ist hier vorteilhaft nahe der Bohrungen 317 im Inneren des Seelenführungsrohrs 316 im Wesentlichen mittig angeordnet, da die Drahtführungs-Seele 719 durch den von ihr geführten, durch das Kontaktrohr 311 zentrierten Draht mittig gehalten wird.

Diese Ausführungsform ist besonders platzsparend, da - im Vergleich zu einem herkömmlichen Schweißkopf - keine zusätzlichen Elemente verstaut werden müssen, zumal die Drahtführungs-Seele 719 typischerweise immer etwas Spiel innerhalb des Seelenführungsrohrs 316 hat.

Obwohl im Vorangehenden vornehmlich Ausführungsformen beschrieben wurden, in welchen das Lichtaufnahmeelement ein Lichteinkoppelelement 121; 321-721 ist, und das Licht 3 des Lichtbogens 2 über einen optischen Leiter 122; 322-722 an einen Photosensor 135 geleitet wird, versteht es sich, dass alternativ anstelle des Lichteinkoppelelements 121; 321-721 auch jeweils direkt ein Photosensor 135 angeordnet sein kann, optional hinter einem optischen Filter (insbesondere zur Ausfilterung von Infrarotlicht). Anstelle des optischen Leiters 122; 322-722 kann in diesem Fall - sowohl in funktionaler als auch in räumlicher Hinsicht - ein elektrischer Leiter 222 vorgesehen und angeordnet werden.

Die Anordnung der Auswerteeinrichtung 130; 230 ist hiervon prinzipiell unabhängig, d.h. auch eine Auswerteeinrichtung 230 zur Auswertung eines elektrischen Lichtstärkesignals kann innerhalb des Fügekopfs 110, oder außerhalb dessen angeordnet sein, beispielsweise innerhalb eines Drahtvorschubgeräts, einer Stromquelle, oder ganz separat.

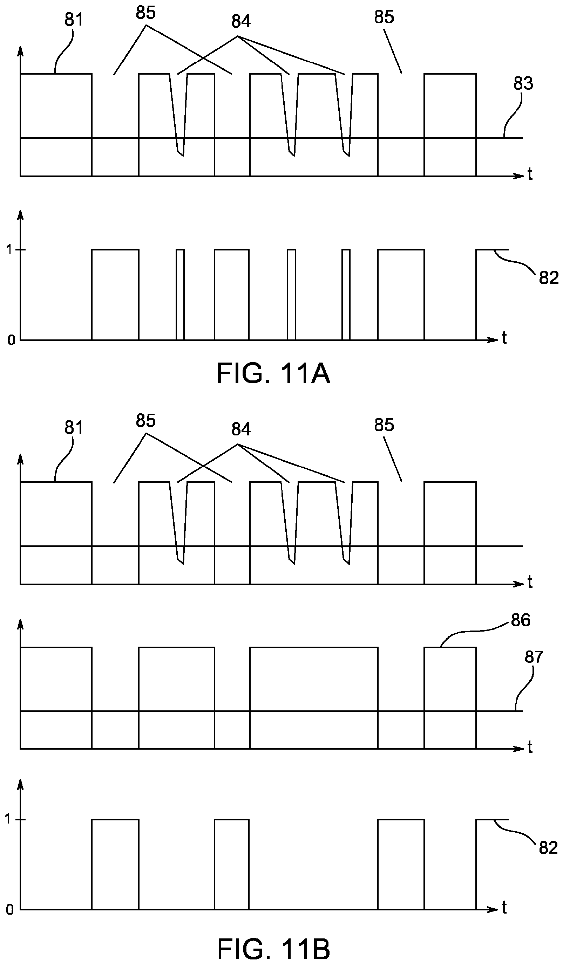

Fig. 11A und Fig. 11B zeigen schematische Graphen zur Erläuterung der erfindungsgemäßen Fügevorrichtungen 100-700. Hierbei illustriert Fig. 11A den Fall in einem Verfahren gemäß dem herkömmlichen Stand der Technik und Fig. 11B den Fall in einem Verfahren gemäß der vorliegenden Erfindung.

Dargestellt sind zunächst, jeweils als Funktion der Zeit t, eine Schweißspannung 81 und ein (hier digitales) Kurzschlusssignal 82, welches das Ergebnis einer Kurzschlusserkennung darstellt, wobei ein durchgehender digitaler/logischer Signalwert von "1"/HI einen Zeitraum mit Kurzschluss markiert, und ein durchgehender digitaler/logischer Signalwert von "0"/LO einen Zeitraum ohne Kurzschluss markiert.

Im Falle eines Kurzschlusses 85 bricht die Schweißspannung 81 stark ein, sodass sie einen entsprechend gesetzten Spannungs-Schwellwert 83 unterschreitet, was im herkömmlichen Stand der Technik direkt in das Kurzschlusssignal 82 umgesetzt wird, wie in Fig. 11A gezeigt ist. Wie eingangs erwähnt wurde, sind diese Messungen jedoch unter Umständen anfällig für äußere Einflüsse, Induktionen, und dergleichen. Somit können durch äußere Einflüsse verursachte Spannungseinbrüche 84 ebenfalls dazu führen, dass der Spannungs-Schwellwert 83 unterschritten wird, und somit im Kurzschlusssignal 82 entsprechend - fälschlich - zusätzliche Kurzschlüsse angezeigt werden, wie in Fig. 11A gut ersichtlich ist.

Erfindungsgemäß kann daher ein Lichtstärkesignal 86, welches eine Lichtstärkeinformation über die Lichtstärke umfasst, verwendet werden, um den Lichtbogenzustand zu bestimmen, d.h., um zu bestimmen, ob der Lichtbogen 2 aktuell brennt oder gelöscht ist. Je nach konkretem Fügeprozess weist ein gelöschter Lichtbogen 2 typischerweise auf einen Kurzschluss hin. Das Lichtstärkesignal 86 ist hier beispielhaft und schematisch mit zwei diskreten Werten dargestellt; es versteht sich, dass das Lichtstärkesignal 86 auch analog ausgebildet sein kann, oder mit mehr als zwei diskreten Werten oder gemäß weiteren Abwandlungen.

In einer einfachen Variante, die anhand von Fig. 11B erläutert wird, kann in der Auswerteeinrichtung 130; 230 beispielsweise ein Lichtstärke-Schwellwert 87 hinterlegt sein. Die Auswerteeinrichtung 130; 230 kann dazu ausgebildet sein, auf das Brennen des Lichtbogens 2 zu schließen, solange die Lichtstärke gemäß dem Lichtstärkesignal 86 oberhalb des Lichtstärke-Schwellwerts 87 liegt, und auf das Erlöschen des Lichtbogens 2 zu schließen, wenn die Lichtstärke unterhalb des Lichtstärke-Schwellwerts 87 liegt, wobei der Wert des Lichtstärke-Schwellwerts 87 einer der beiden Seiten zugeschlagen wird.

Dementsprechend kann die Auswerteeinrichtung 130; 230 auch dazu eingerichtet sein, ein Kurzschlusssignal 82 basierend auf der aktuellen Lichtstärke, die durch das aktuelle Lichtstärkesignal 86 angezeigt wird (z.B. hier basierend auf dem digitalen Lichtstärkesignal 86), sowie basierend auf dem Lichtstärke-Schwellwert 87 zu erzeugen. Alternativ und gleichbedeutend kann der Graph des Kurzschlusssignals 82 auch für ein Lichtbogenzustand-Signal stehen, wobei logisch 1 (oder HI) für "Lichtbogen erloschen" steht und logisch 0 (oder LO) für "Lichtbogen brennt". Eine Realisierung kann natürlich jeweils auch umgekehrt erfolgen, d.h. mit vertauschten Bedeutungen von logisch 1 und logisch 0.

Der Lichtstärke-Schwellwert 87 kann allgemein fix sein, oder für einen oder mehrere durch die jeweilige Fügevorrichtung 100-700 durchführbaren Fügeprozess jeweils unterschiedlich sein, wobei auch eine aktuelle Parametereinstellung berücksichtigt werden kann. Hierzu kann eine Tabelle für Lichtstärke-Schwellwerte 87 in der Auswerteeinrichtung 130; 230 hinterlegt sein, oder für diese mittels einer Kommunikationsschnittstelle zugänglich sein, etwa auf einem entfernt angeordneten Server.

Fig. 11B verdeutlicht, dass unter Verwendung der vorliegenden Erfindung (im Vergleich zum Stand der Technik gemäß Fig. 11A) nur die Phasen mit tatsächlichen Kurzschlüssen 85 (also erloschenem Lichtbogen 2) auch zu einer entsprechenden Veränderung des Lichtstärkesignals 86 (hier: nach 0 hin) führen, und dementsprechend das Detektieren eines Kurzschlusses (bzw. eines erloschenen Lichtbogens 2) in dem Kurzschlusssignal 82 (hier: durch Veränderung auf den Wert 1 hin) bewirken. Die Spannungseinbrüche 84 hingegen sind nicht durch Veränderungen am Lichtbogen 2 verursacht und gehen daher nicht mit einer entsprechenden Veränderung des Lichtstärkesignals 86 einher, sodass trotz der Spannungseinbrüche 84 - korrekt - auf einen weiterhin brennenden Lichtbogen 2 geschlossen wird (bzw. darauf, dass aktuell kein Kurzschluss vorliegt).

Es versteht sich, dass die Auswerteeinrichtung 130; 230 auch dazu eingerichtet sein kann, mindestens eine Zusatzinformation über den aktuell brennenden Lichtbogen 2 basierend auf dem Signalverlauf des Lichtstärkesignals zu bestimmen. Beispielsweise kann die Auswerteeinrichtung 130; 230 dazu eine Musteranalyse durchführen, ein Maschinenlernenmodell (etwa ein künstliches neuronales Netzwerk) auf das Lichtstärkesignal anwenden, und/oder dergleichen mehr.

Die Zusatzinformation über den aktuell brennenden Lichtbogen 2 kann beispielsweise das Vorliegen von Schwankungen in der Lichtbogenlänge anzeigen oder sogar quantifizieren, da die Menge erzeugten Lichts typischer Weise mit der Lichtbogenlänge skaliert. Alternativ oder zusätzlich können auch ein "Lichtbogen-Suchen" aufgrund unsauberer Oberflächen auf dem Werkstück 9 oder ähnliche störende Effekte detektiert, überwacht, und/oder quantifiziert werden.

Alternativ oder zusätzlich zu der Zusatzinformation über den aktuell brennenden Lichtbogen 2 kann durch die Auswerteeinrichtung 130; 230 auch eine Zusatzinformation über einen Zustand des Fügeprozesses bestimmt werden. Eine unerwartete Verringerung der Lichtstärke trotz brennendem Lichtbogen 2 (also oberhalb des Lichtstärke-Schwellwerts 87) kann beispielsweise auf einen Fehlerzustand des Fügeprozesses hinweisen, beispielsweise eine übergroße Schmauchentwicklung, eine falsche Positionierung oder Ausrichtung des Fügekopfs 110;310-710 und/oder dergleichen mehr.

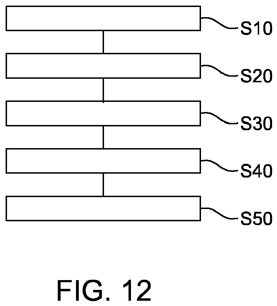

Fig. 12 zeigt ein schematisches Flussdiagramm zum Erläutern eines Verfahrens gemäß einer Ausführungsform der vorliegenden Erfindung, d.h., eines Verfahren zum Fügen eines Werkstücks 9 mittels eines Fügeprozesses. Das Verfahren ist mittels einer beliebigen Fügevorrichtung gemäß einer Ausführungsform der vorliegenden Erfindung ausführbar, aber auch unabhängig davon. Dementsprechend kann das erfindungsgemäße Verfahren gemäß allen hierin beschriebenen Optionen, Varianten, Ausführungsformen, und Verfeinerungen von Ausführungsformen angepasst werden und umgekehrt.

In einem Schritt S10 wird der gewünschte Fügeprozess durchgeführt, umfassend zumindest ein Erzeugen eines Lichtbogens 2 zum Abgeben von Energie zum Fügen des Werkstücks 9. Bei dem Fügeprozess kann es sich beispielsweise um ein Lichtbogenlöten, ein Schweißen und/oder dergleichen handeln.

In einem Schritt S20 wird ein aktuelles Lichtstärkesignal 86 erzeugt, welches eine aktuelle Lichtstärkeinformation über eine Lichtstärke von Licht 3 umfasst, welches bei dem Erzeugen S20 des Lichtbogens 2 entsteht. Wie im Vorangehenden ausführlich beschrieben wurde, kann das Lichtstärkesignal 86 durch Licht als Medium getragen werden und/oder durch elektrische Signale als Medium getragen werden. Dementsprechend kann das Lichtstärkesignal 86 beispielsweise durch Einkoppeln des erzeugten Lichts 3 in einen optischen Leiter 122; 322-722 und/oder durch Wandeln des erzeugten Lichts 3 in elektrische Signale durch einen Photosensor 135; 221 erfolgen.

In einem Schritt S30 wird, basierend auf dem erzeugten Lichtstärkesignal 86, bestimmt, ob aktuell der Lichtbogen 2 brennt. Wie erläutert, kann zusätzlich oder alternativ auch bestimmt werden, ob aktuell ein Kurzschluss vorliegt.

In einem Schritt S40 wird der Fügeprozess in Abhängigkeit davon, ob der Lichtbogen 2 aktuell brennt oder nicht, gesteuert und/oder geregelt. Insbesondere können elektrische Parameter wie Strom und Spannung, oder mechanische Parameter wie Drahtvorschubgeschwindigkeit und dergleichen gesteuert und/oder geregelt werden.

In einem optionalen Schritt S50 wird mindestens eine Zusatzinformation über einen aktuell brennenden Lichtbogen 2 und/oder einen Zustand des Fügeprozesses basierend auf einem - insbesondere analogen - Signalverlauf des Lichtstärkesignals 86 bestimmt, wie im Vorangehenden insbesondere im Zusammenhang mit Fig. 10 bereits ausführlich erläutert wurde.

Im Vorangehenden wurden verschiedene Elemente der vorliegenden Erfindung anhand ausgewählter Ausführungsformen beschrieben. Es versteht sich jedoch, dass die darin beschriebenen Elemente, Funktionalitäten, und Konzepte frei miteinander kombinierbar sind, um verschiedenen Anforderungen an Fügevorrichtung zu entsprechen.

### Bezugszeichenliste

- 1: Drahtelektrode
- 2: Lichtbogen
- 3: Licht
- 4: Schutzgas
- 9: Werkstück (oder: Masse)
- 22: Lichtwellenleiter
- 71: Kugelgeometrie
- 72: Kapsel
- 73: abgeschrägte Spitze
- 74: Außenseite
- 75: Außenseite
- 81: Schweißspannung
- 82: Kurzschlusssignal
- 83: Spannungs-Schwellwert
- 84: Spannungseinbruch
- 85: Kurzschluss
- 86: Lichtstärkesignal
- 87: Lichtstärke-Schwellwert
- 100: Fügevorrichtung
- 110: Fügekopf
- 111: Kontaktrohr
- 121: Lichteinkoppelelement
- 122: optischer Leiter
- 129: optischer Filter
- 130: Auswerteeinrichtung
- 135: Photosensor
- 140: Steuereinrichtung
- 200: Fügevorrichtung
- 221: Photosensor
- 222: elektrische Leiter
- 230: Auswerteeinrichtung
- 300: Fügevorrichtung
- 310: Schweißkopf
- 311: Kontaktrohr
- 312: Gasdüse
- 313: Düsenstock
- 314: Spritzerschutz
- 315: Isolierring
- 316: Seelenführungsrohr
- 317: Bohrungen
- 318: Öffnungen
- 319: Wasserkühlung
- 321: Lichteinkoppelelement
- 322: optischer Leiter
- 400: Fügevorrichtung
- 410: Schweißkopf
- 421: Lichteinkoppelelement
- 422: optischer Leiter
- 500: Fügevorrichtung
- 510: Schweißkopf
- 515: Isolierring
- 521: Lichteinkoppelelement
- 522: optischer Leiter
- 600: Fügevorrichtung
- 610: Schweißkopf
- 621: Lichteinkoppelelement
- 622: optischer Leiter
- 700: Fügevorrichtung
- 710: Schweißkopf
- 719: Drahtführungs-Seele
- 721: Lichteinkoppelelement
- 722: optischer Leiter

## Patentansprüche

1. Fügevorrichtung (100-700), umfassend:
einen Fügekopf (110; 310-710), welcher dazu ausgebildet ist,
einen Lichtbogen (2) zu erzeugen und damit Energie zum Fügen eines Werkstücks (9) auf das Werkstück (9) abzugeben;
ein Lichtaufnahmeelement (121-721); und
eine Auswerteeinrichtung (130; 230), welche dazu eingerichtet ist, ein aktuelles Lichtstärkesignal (86) zu erhalten, welches eine Lichtstärkeinformation über eine Lichtstärke an dem Lichtaufnahmeelement (121-721) umfasst, und welche außerdem dazu eingerichtet ist, basierend auf dem Lichtstärkesignal zu bestimmen, ob aktuell ein Lichtbogen (2) brennt.

2. Fügevorrichtung (100; 300-700) nach Anspruch 1, wobei das Lichtaufnahmeelement ein optisches Einkoppelelement (121; 321-721) umfasst, welches dazu eingerichtet ist, aktuell auf das Lichtaufnahmeelement (121; 321-721) einfallendes Licht (3) als das aktuelle Lichtstärkesignal (86) in einen optischen Leiter (122; 322-722), beispielsweise eine Glasfaserleitung und/oder eine Kunststoffaserleitung, einzukoppeln, und wobei die Auswerteeinrichtung (130) einen Photosensor (135) aufweist, welcher dazu eingerichtet ist, das eingekoppelte Licht nach dessen Durchquerung des optischen Leiters (122; 322-722) in ein elektrisches Signal zur Auswertung durch die Auswerteeinrichtung (130) umzuwandeln.

3. Fügevorrichtung (300-700) nach Anspruch 2, wobei der optische Leiter (322-722) zumindest teilweise parallel zu einer Drahtführungs-Seele (719) und/oder einem Seelenführungsrohrs (316) für eine abschmelzende Drahtelektrode (1) der Fügevorrichtung (300-700) verläuft, und insbesondere zumindest teilweise in die Drahtführungs-Seele (719) integriert ist.

4. Fügevorrichtung (600) nach Anspruch 2 oder 3, wobei der optische Leiter (622) ein Hohlrohr umfasst, wobei bevorzugt mittels eines Gasführungssystems des Fügekopfs (610) ein Überdruck in dem Hohlrohr ausbildbar ist.

5. Fügevorrichtung (200) nach Anspruch 1, wobei das Lichtaufnahmeelement (221) einen in dem Fügekopf (110) angeordneten Photosensor aufweist, welcher dazu eingerichtet ist, das aktuelle Lichtstärkesignal (86), welches die Lichtstärkeinformation umfasst, durch Wandeln eines auf das Lichtaufnahmeelement (221) einfallenden Lichts in ein elektrisches Signal zu erzeugen.

6. Fügevorrichtung (100-700) nach einem der Ansprüche 1 bis 5, wobei das Lichtaufnahmeelement (121-721) und/oder die Auswerteeinrichtung (130; 230) einen optischen Filter (129) aufweist, insbesondere einen Infrarotfilter.

7. Fügevorrichtung (100-700) nach einem der Ansprüche 1 bis 6, wobei der Fügekopf (110;310-710) ein Gasführungssystem zum Ausströmen eines Schutzgases (4) aufweist, und das Lichtaufnahmeelement (121-721) in einem Überdruckbereich des Gasführungssystems angeordnet ist.

8. Fügevorrichtung (100; 200) nach einem der Ansprüche 1 bis 7, wobei das Lichtaufnahmeelement (121; 221) zum Aufnehmen von Licht in einem Zwischenraum zwischen einem Kontaktrohr (311) des Fügekopfs (110;310-710) und einer Gasdüse (312) des Fügekopfs (110;310-710) angeordnet und eingerichtet ist.

9. Fügevorrichtung (300; 600) nach einem der Ansprüche 1 bis 7, wobei das Lichtaufnahmeelement (321; 621) zum Aufnehmen von Licht in einem Zwischenraum zwischen einem Düsenstock (313) des Fügekopfs und einem Spritzerschutz (314) des Fügekopfs (310; 610) angeordnet und eingerichtet ist.

10. Fügevorrichtung (500) nach einem der Ansprüche 1 bis 7, wobei das Lichtaufnahmeelement (521) an einem lichtdurchlässigen Element des Fügekopfs (510) anliegt und zum Aufnehmen von Licht (3) durch das lichtdurchlässige Element hindurch eingerichtet ist, wobei es sich bei dem lichtdurchlässigen Element insbesondere um einen Isolierring (515) zwischen einem Düsenstock (313) des Fügekopfs und einem Brennerkörper des Fügekopfs (510) oder um einen Spritzerschutz (314) des Fügekopfs (510) handelt.

11. Fügevorrichtung (400; 700) nach einem der Ansprüche 1 bis 7, wobei das Lichtaufnahmeelement (421; 721) im Inneren eines Düsenstocks (313) des Fügekopfs (410; 710) angeordnet ist.

12. Fügevorrichtung (100; 200) nach einem der Ansprüche 1 bis 11, wobei das Lichtaufnahmeelement (121; 221) zumindest teilweise außerhalb des Fügekopfs (110) angeordnet ist.

13. Fügevorrichtung (100-700) nach einem der Ansprüche 1 bis 12, außerdem umfassend eine Steuereinrichtung (140), welche dazu eingerichtet ist, basierend auf dem Lichtstärkesignal (86) mindestens eine Funktion der Fügevorrichtung (100-700) zu steuern und/oder zu regeln.

14. Verfahren zum Fügen eines Werkstücks (9) mittels eines Fügeprozesses, umfassend zumindest die Schritte:
Durchführen (S10) des Fügeprozesses, umfassend zumindest ein Erzeugen eines Lichtbogens (2) zum Abgeben von Energie zum Fügen des Werkstücks (9);
Erzeugen (S20) eines aktuellen Lichtstärkesignals (86), welches eine aktuelle Lichtstärkeinformation über eine Lichtstärke von Licht (3) umfasst, welches bei dem Erzeugen des Lichtbogens (2) entsteht;
Bestimmen (S30), basierend auf dem Lichtstärkesignal (86), ob aktuell der Lichtbogen (2) brennt; und
Steuern und/oder Regeln (S40) des Fügeprozesses in Abhängigkeit davon, ob der Lichtbogen (2) aktuell brennt.

15. Verfahren nach Anspruch 14, außerdem umfassend ein Bestimmen (S50) mindestens einer Zusatzinformation über einen aktuell brennenden Lichtbogen (2) und/oder einen Zustand des Fügeprozesses basierend auf einem - insbesondere analogen - Signalverlauf des Lichtstärkesignals (86).
